# EUROPÄISCHE PATENTSCHRIFT

(11) **EP 2 802 387 B1**
(45) Veröffentlichungstag und Bekanntmachung des Hinweises auf die Patenterteilung: **15.05.2019**
(21) Anmeldenummer: 12844658.0
(22) Anmeldetag: 20.12.2012
(51) Int. Cl.: A62C 3/07, A62C 35/02, A62C 35/13, A62C 37/36, A62C 99/00, B60H 1/00, A62C 37/11, A62C 37/14, A62C 37/16

(54) **SCHUTZEINRICHTUNG**
PROTECTION DEVICE
SYSTÈME DE PROTECTION

(30) Priorität: 10.01.2012 DE 102012100177; 15.06.2012 DE 102012105191
(43) Veröffentlichungstag der Anmeldung: 19.11.2014
(73) Patentinhaber: Wedowski, Michael, 14474 Potsdam (DE)
(72) Erfinder: WEDOWSKI, Michael, 14474 Potsdam (DE)
(74) Vertreter: Kayser, Christoph
(86) Internationale Anmeldenummer: PCT/DE2012/100397
(87) Internationale Veröffentlichungsnummer: WO 2013/104351

(56) Entgegenhaltungen:
- EP-A1- 1 234 600
- EP-A1- 1 666 287
- WO-A1-01/62344
- WO-A2-2009/114186
- DE-A1- 4 207 859
- DE-A1- 10 251 794
- GB-A- 2 271 058
- GB-A- 2 284 015
- GB-A- 2 412 864

## Beschreibung

Die Erfindung bezieht sich auf eine Schutzeinrichtung, insbesondere Brandschutzeinrichtung an einem Kraftfahrzeug sowie Verwendungen der Schutzeinrichtung.

Aus der Praxis sind eine Vielzahl von Brandschutzsystemen bekannt, die aber in der Regel nur stationäre Verwendung finden. Im mobilen Bereich gibt es Ansätze, einen Motorraum mit einem Löschmittel, beispielsweise aus einem mobilen Feuerlöscher, zu fluten.

Im Weiteren findet in Klimaanlagen, insbesondere in Kraftfahrzeugen, häufig als Kältemittel 2,3,3,3-Tetrafluorpropen Verwendung, da sich dieses Kältemittel auch in Klimaanlagen nach dem Stand der Technik, die beispielsweise für derzeit unzulässige Kältemittel entwickelt wurden, verwenden lässt. Dieses Tetrafluorpropen ist relativ klimafreundlich, aber brennbar. Dennoch soll 2,3,3,3-Tetrafluor-propen als Ersatzstoff für Tetrafluorethan als Kältemittel in Klimaanlagen zukünftiger Kraftfahrzeuge verwendet werden. Problematisch ist die Einstufung von 2,3,3,3-Tetrafluorpropen als hochentzündlich und die Bildung brennbarer Gas-Luft-Gemische. Der Explosionsbereich liegt in etwa zwischen 6,2 Vol% als untere Explosionsgrenze und 12,3 Vol% als obere Explosionsgrenze. Die Selbstentzündungstemperatur wird mit ca. 400 °C in der Literatur angegeben. Bei der Verbrennung wird giftiger und ätzender Fluorwasserstoff frei und beim Löschen eines Brandes, beispielsweise nach einem Unfall, kann Flusssäure entstehen. EP 1 666 287 A1 offenbart dafür eine Klimaanlage mit einem Kältemittelaufnahmebehälter, der eine Freilassung eines solchen entzündbaren Kältemittels bei einem Unfall eines Kraftfahrzeuges vermeiden soll. Im Fall eines, durch einen Crash-Sensor detektierten Unfall, wird dadurch das Kältemittel aus dem Rest der Klimaanlage abgesaugt und in dem Kältemittelaufnahmebehälter aufbewahrt.

Auch weitere bekannte Kältemittel sind für die Umwelt unproblematisch, solange sie sich in einem geschlossenen Kreislauf befinden.

Die GB 2 271 058 A, GB 2412 864 A, EP 1 234 600 A1, GB 2 284 015 A und DE 102 51 794 A1 offenbaren jeweils eine Schutzeinrichtung, insbesondere Brandschutzbekämpfungseinrichtung an einem Kraftfahrzeug, mit einer Feuerbekämpfungsvorrichtung, die mindestens einen mit Löschmittel gefüllten Behälter, der an einer Karosserie eines Fahr- oder Flug-zeugs oder einer Gebäudewand oder -decke zuordenbar ist und mindestens eine mit einem temperaturgesteuerten Ventil zu verschließenden Austrittsöffnung umfasst.

Der Erfindung liegt die Aufgabe zugrunde, eine Schutzeinrichtung der eingangs genannten Art zu schaffen, die mit einfachen und zuverlässigen Mitteln selbsttätig die Ausbreitung eines Feuers und/oder eine Umweltbeeinträchtigung verhindert. Erfindungsgemäß wird die Aufgabe durch die Merkmale der unabhängigen Ansprüche gelöst.

Die Unteransprüche stellen vorteilhafte Ausgestaltungen der Erfindung dar.

Eine Schutzeinrichtung, insbesondere Brandschutzeinrichtung an einem Kraftfahrzeug, mit einer Feuerbekämpfungsvorrichtung, umfasst mindestens einen mit Löschmittel gefüllten Behälter, der einer Karosserie eines Fahr- oder Flugzeuges oder einer Gebäudewand oder -decke zuordenbar ist und mindestens eine mit einem temperaturgesteuerten Ventil zu verschließende und eine Düse aufweisende Austrittsvorrichtung, die an ihrem in ihrem Grundkörper vorhandenen Auslass eine durch das ausströmende Löschmittel von dem Grundkörper lösbare Schutzkappe aufweist, wobei das Ventil ein mit einer Flüssigkeit und/oder Luft gefülltes Glasröhrchen umfasst, das in ein Metallrohr eingesetzt ist und bei einer vorbestimmten Temperatur zerbricht und einen Durchlass für das Löschmittel freigibt oder das Ventil einen Ventilstößel aus einem Memory-Metall umfasst, der bei einer vorgegebenen Temperatur mindestens einen Durchlass für das Löschmittel freigibt oder das Ventil als ein pyrotechnisches Berstventil ausgebildet ist, das aufgrund von Informationen des Sensors betätigbar ist.

Die Schutzeinrichtung kann integraler Bestandteil eines Fahrzeugs, insbesondere eines Kraftfahrzeuges, eines Schiffes, Flugzeuges oder auch eines Gebäudes oder aber als Nachrüstsatz ausgebildet sein und umfasst im Wesentlichen die Feuerbekämpfungsvorrichtung mit dem mit Löschmittel gefüllten Behälter und/oder den mindestens einen Tank zur Aufnahme des Kältemittels der Klimaanlage. Beispielsweise bei einem Brand öffnet das Ventil die Austrittsvorrichtung, damit das Löschmittel zur Brandbekämpfung durch die Austrittsvorrichtung den Behälter verlassen kann.

Das Ventil umfasst das mit einer Flüssigkeit und/oder Luft gefüllte Glasröhrchen, das bei einer vorbestimmten Temperatur zerbricht und einen Durchlass für das Löschmittel oder das Kältemittel freigibt. In bekannter Weise entsteht bei einer bestimmten Temperatur ein erhöhter Druck innerhalb des Glasröhrchens, der ein Bersten des Glasröhrchens bewirkt, wodurch ein Ventilsitz freigegeben wird. Die Glasröhrchen sind in Abhängigkeit von der verwendeten Flüssigkeit auch bei tiefen Temperaturen, vorzugsweise bis ca. -30°C, und besonders bevorzugt lageunabhängig uns ohne zusätzliche Energiezufuhr zu betreiben. Die beispielsweise aus Aluminium gefertigte Kapselung des Glasröhrchens durch das Metallrohr bewirkt eine zuverlässige Wärmeleitung.

Alternativ umfasst das Ventil einen Ventilstößel aus einem Memory-Metall, einem Formgedächtnismetall, der bei einer vorgegebenen Temperatur mindestens einen Durchlass für das Löschmittel oder das Kältemittel freigibt. Auch bei dieser Ausgestaltung wird neben Wärme keine zusätzliche Energie zum Öffnen des Ventils benötigt.

In weiterer alternativer Ausgestaltung ist das Ventil als ein pyrotechnisches Berstventil ausgebildet, das aufgrund von Informationen des Sensors öffenbar ist. Das Ventil selbst kann beispielsweise temperaturempfindlich ausgebildet sein. Es ist aber auch möglich, einen elektrischen Impuls aufgrund eines Sensorsignals, das beispielsweise auf einen Brand schließen lässt, an das als pyrotechnisches Berstventil ausgeführte Ventil zu senden, das entfernt zu dem Sensor und damit insbesondere dem eigentlichen Brandherd angeordnet sein kann, um einen Austritt des Löschmittels aus dem Behälter zu ermöglichen und das Feuer zu löschen oder ein Eindringen des Kältemittels in den Tank zu bewirken. Anstelle eines Berstventils, das ein schlagartiges Freisetzen des Löschmittels bzw. Öffnen des entsprechenden Strömungskanals ermöglicht, kann auch ein Stellventil mit einem entsprechenden Antrieb vorgesehen sein, damit das Löschmittel dosiert den Behälter verlässt.

Damit die Austrittsvorrichtung funktionsfähig bleibt, insbesondere in einer staubigen Umgebung, weist die Austrittsvorrichtung an ihrem Auslass eine Schutzkappe auf, die durch das ausströmende Löschmittel lösbar ist.

Das Ventil ist entweder mechanisch oder elektromechanisch, oder pyrotechnisch, insbesondere durch einen elektrischen Impuls, vorzugsweise schlagartig zu öffnen. Die Bauform des Ventils wird entsprechend der Anforderungen an seine Öffnungsgeschwindigkeit, also beispielsweise schlagartig oder kontinuierlich, seine Möglichkeit zum Öffnen und/oder Schließen oder seinen Einbauraum bestimmt und gewählt. Zur gezielten Ansteuerung ist vorteilhafterweise das Ventil mit einem elektronischen Steuergerät verbunden.

Vorzugsweise tritt das Löschmittel durch die dem Behälter zugeordnete Austrittsvorrichtung, die insbesondere eine Düse umfasst, aus dem Behälter aus, entweder aufgrund eines in dem Behälter herrschenden Überdruckes oder schwerkraftgesteuert. Durch eine Düse oder eine Art Brause lässt sich das Löschmittel gezielt verteilen. Wenn in dem Behälter ein das Löschmittel austragender Druck herrscht oder das Löschmittel bei geöffnetem Ventil beispielsweise aufgrund seiner Gewichtskraft aus dem Behälter austritt, ist es nicht erforderlich, dem Behälter eine Fördereinrichtung, wie beispielsweise eine Pumpe, zuzuordnen. Natürlich kann die Fördereinrichtung zum Transport des Löschmittels sinnvoll sein und ihre Anordnung ist nicht vollständig ausgeschlossen.

Um im Fall einer Brandstiftung unter Umständen die den Brand verursachende Person zu markieren, tritt zweckmäßigerweise bei dem Austritt des Löschmittels ein Farbstoff aus dem Behälter aus und/oder das Löschmittel umfasst den Farbstoff.

Vorzugsweise ist der Behälter an einer Karosserie, innerhalb eines Motorraums, vorzugsweise an einem Motorraumdeckel, und/oder innerhalb eines Fahrzeuginnenraums, vorzugsweise an einer Dachstruktur, und/oder im Bereich eines Kraftstofftanks und/oder einer Brennstoffzelle und/oder einem Akkumulator angeordnet. Behälter mit Löschmittel lassen sich überall dort anordnen, wo ausreichend Platz zur Verfügung steht, selbstverständlich können mehrere Behälter an verschiedenen Orten vorgesehen sein. Da die Schutzeinrichtung nicht auf die Verwendung in einem Kraftfahrzeug beschränkt ist, lässt sich der Behälter auch an einer Geschossdecke, in einem Technikraum, beispielsweise auch in einem Schiff oder Flugzeug unterbringen. Ein weiterer Aspekt ist auch die mögliche Befestigung an Stellen, die bevorzugt von Brandstiftern ausgewählt werden, um einen Brand an einem parkenden Kraftfahrzeug zu legen, wie beispielsweise in den Radkästen bzw. im Bereich des Kraftstofftanks. Selbstverständlich kann die zur Verfügung stehende Anzahl von Stauräumen für Behälter bei der Unterbringung während der Fertigung des Kraftfahrzeugs größer als bei der nachträglichen Anbringung sein. Das Löschmittel kann als Gas, Flüssigkeit, Schaum oder dergleichen ausgebildet sein. Dem mit der Brandbekämpfung vertrauten Fachmann sind unterschiedliche Löschmittel bekannt, die im Zusammenhang mit verschiedenen Brandursachen vorteilhaft sind.

Eine erfindungsmäßige Brandschutzeinrichtung an einem Kraftfahrzeug, umfasst mindestens einen an eine Klimaanlage strömungstechnisch anschließbaren temperaturbeständigen Tank, in dem zur Aufnahme eines Kältemittels der Klimaanlage ein Unterdruck herrscht, und dem ein Ventil zum Öffnen mindestens eines Strömungskanals für das Kältemittel zugeordnet ist. Das Ventil ist ein mindestens temperaturgesteuertes Ventil und in dem Tank ist ein Medium zum Binden und/oder Neutralisieren des Kältemittels vorhanden.

Das Ventil öffnet einen Strömungskanal, damit aufgrund des in dem Tank herrschenden Unterdrucks das Kältemittel in den Tank gelangt. Der Tank ist quasi selbstansaugend und es werden nicht zwingend Fördereinrichtungen zum Transport des Kältemittels aus der Klimaanlage in den Tank benötigt. Das Ventil ist zumindest temperaturgesteuert, kann aber auch durch alternative bzw. zusätzliche Signale geöffnet werden, beispielsweise durch ein Airbagsignal, wenn der Tank in einem Kraftfahrzeug installiert ist. Es kann auch ein Drucksensor vorhanden sein, der bei einem vorbestimmten Druckabfall in einer vorgegebenen Zeit das zweite Ventil öffnet, damit zumindest ein überwiegender Teil des Kältemittels der Klimaanlage in den Tank gelangt und nicht in die Umgebung.

Nach einer Weiterbildung ist der Tank mit einem Kompressor oder einer Schlauchleitung der Klimaanlage derart verbunden, dass bei einem Öffnen des Ventils das Kältemittel in den Tank evakuiert wird, wobei der Tank, insbesondere in einem ausgeschalteten Zustand der Klimaanlage, als Vorratsspeicher dient. Der Tank kann parallel zu einer Leitung der Klimaanlage angeordnet sein, wobei es sich selbstverständlich nicht zwingend um eine Schlauchleitung, also einer flexiblen Leitung, handeln muss, es ist auch eine Rohrleitung denkbar, insbesondere in dem Bereich, der den Tank aufweist. Vorzugsweise sind mehrere Tanks vorgesehen, die bei einem Schadenfall schnell das im Kältemittelkreislauf vorhandene Kältemittel aufnehmen. Wenn der Tank in einem ausgeschalteten Zustand der Klimaanlage als Vorratsspeicher für das Kältemittel dient, also zumindest ein Teilvolumen des in dem Kältemittelkreislauf vorhandenen Kältemittels aufnimmt, ist dieses Teilvolumen relativ sicher gelagert. Damit das Kältemittel schnell in den Tank gelangt, kann ein der Leitung für das Kältemittel ein Belüftungsventil zugeordnet sein. Ebenso ist es von der Erfindung umfasst, dass der Tank zur Aufbewahrung des Kältemittels dient, wenn die Klimaanlage nicht in Betrieb ist. Der Tank kann mit Ventilen gegenüber dem Kreislauf abgesperrt sein. Selbstverständlich kann in den Kältemittekreislauf auch eine Pumpe eingebaut sein, um das Kältemittel in den Tank zu befördern, wenn die Klimaanlage außer Betrieb ist.

In weiterer Ausgestaltung nimmt der Tank mittels eines Vakuums das Kältemittel auf. Bei einem Unterdruck aufweisenden Tank wird das Kältemittel bei geöffnetem Ventil aus dem Kompressor bzw. dem Kältemittelkreislauf in den Tank gesaugt, um mit dem Bindemittel und/oder Neutralisationsmittel zusammenzuwirken, um insbesondere bei einem Löschen eines Kraftfahrzeuges das Entstehen von Flusssäure oder eine sonstige Umweltbelastung zu verhindern. Dieser Vorgang wird selbstverständlich beschleunigt, wenn gleichzeitig ein Belüftungsventil in dem Kältemittelkreislauf geöffnet wird.

Vorteilhafterweise weist der Tank einen Zwischenboden auf, der einen Unterdruckbereich von einem Vorratsbereich trennt und in dem durch das zweite Ventil zu öffnende Durchlässe vorhanden sind. Hierbei kann das Ventil derart ausgebildet und angeordnet sein, dass es beim Öffnen der Strömungskanäle eine Sogwirkung erzeugt. Das in dem Tank, vorzugsweise in dessen Unterdruckbereich, vorhandene Medium zum Binden und/oder Neutralisieren des Kältemittels, ist ein Zwei-Komponenten-Bindemittel oder eine saugfähige Matte. Die offenzellige Matte, ein Schaum oder dergleichen ist in der Lage das Kältemittel aufzunehmen und gegebenenfalls zu binden. Das Medium kann zur Aufnahme, also Bindung, des Kältemittels beispielsweise offenzellig sein und gleichzeitig chemisch mit dem Kältemittel zu dessen Neutralisation reagieren. Bei einem Zwei- oder MehrKomponenten-Bindemittel müssen zunächst die Komponenten, die auch in unterschiedlichen Tanks oder Tankabschnitten aufbewahrt werden, zusammengeführt werden, um die gewünschte Reaktion hervorzurufen.

Zweckmäßigerweise ist dem Tank eine Kopplungseinrichtung mit einer Penetrationseinrichtung für die Schlauchleitung der Klimaanlage zugeordnet. Die Kopplungseinrichtung öffnet und/oder schließt beispielsweise aufgrund eines definierten Sensorsignals die Strömungsverbindung zwischen dem Tank und dem Kältemittelkreislauf der Klimaanlage. Die Kopplungseinrichtung kann zum Beispiel mit dem zweiten Ventil ausgestattet sein. Vorzugsweise umfasst die Kopplungseinrichtung eine Penetrationseinrichtung für die Schlauchleitung der Klimaanlage. Demnach ist es möglich, dass ein Dorn zum Durchstechen einer Schlauchleitung vorgesehen ist, wobei nach dem derartigen Öffnen der Schlauchleitung ein Strömungskanal für das Kältemittel zwischen der Klimaanlage und dem Tank besteht.

Der Tank ist integraler Bestandteil eines Gehäuses des Kompressors der Klimaanlage. Der Tank kann demnach relativ platzsparend angeordnet und gemeinsam mit dem Kompressor gefertigt sowie installiert werden. Alternativ sind mehrere Tanks mit den Schlauchleitungen der Klimaanlage verbunden.

Die im Zusammenhang mit der Schutzeinrichtung verwendeten Sensoren sind dem Fachmann aus dem Stand der Technik bekannt, wobei es sich bei einem Rauchsensor selbstverständlich um einen optischen bzw. photoelektrischen Rauchmelder oder einen Ionisationsrauchmelder handeln kann. Hier ist lediglich zu beachten, dass Ionisationsrauchmelder besonders empfindlich auf kleine Rauchpartikel reagieren, wie sie beispielsweise bei einem flammenden Brand oder in Dieselruß, auftreten und optische Rauchmelder zum frühzeitigen Erkennen von Schwelbränden mit relativ großen und hellen Rauchpartikeln besser geeignet sind. Die Sensoren, die in beliebiger Ausgestaltung und Anzahl an relevanten Stellen des Kraftfahrzeugs, beispielsweise im Motor- oder Kofferraum oder in den Radkästen oder im Bereich eines Kraftstofftanks angeordnet werden können, lassen sich miteinander vernetzen, insbesondere über ein Fahrzeug-Bus-System, das auch relevante Steuergerte umfasst. Beim Vorliegen entsprechender Signale der Sensoren, die auch im abgestellten Zustand des Kraftfahrzeuges aktiviert sein können, wird die entweder lokal begrenzt oder am gesamten Kraftfahrzeug wirksame Schutzvorrichtung aktiviert, beispielsweise unter Verwendung eines in einem Kraftfahrzeug vorhandenen Steuergerätes oder eines separaten Computers der Schutzeinrichtung. Da im Zusammenhang mit einer Klimaanlage verwendete Kältemittel umweltschädlich bzw. brandfördernd sein können, wird bei Erkennung eines Brandes das Kältemittel zur sicheren Aufbewahrung in den temperaturbeständigen Tank gefördert, der sich nach der Brandbekämpfung sachgerecht entsorgen lässt.

Um die Schutzeinrichtung beispielsweise in Abhängigkeit von der Schwere eines Unfalls zu aktivieren, ist ein Steuergerät mit dem Sensor gekoppelt, das mit einem weiteren Sensor, vorzugsweise einem Airbagsensor, in Verbindung steht. Bei dem Steuergerät kann es sich um ein Airbagsteuergerät in dem Kraftfahrzeug handeln, dass die Signale der daran angeschlossenen Airbagsensoren, Radsensoren, Beschleunigungssensoren usw. auswertet, um auf einen Unfall zu schließen.

Bevorzugt sind die Sensoren, die Ventile und/oder das mindestens eine Steuergerät zur Energieversorgung mit der Fahrzeugbatterie und/oder einer Not-Batterie und/oder einem Auslöseschalter verbunden. Die Not-Batterie kann auch im Fall eines Nachrüstsatzes als ausschließliche Energiequelle installiert werden, und die Fahrzeugbatterie, insbesondere eine Starterbatterie, nicht zu hoch zu belasten. Durch den Auslöseschalter, der einer Armaturentafel im Innenraum des Kraftfahrzeuges oder als Funkschalter ausgebildet einem Funkschlüssel zugeordnet sein kann, ist ein manuelles Aktivieren der Brandschutzeinrichtung zum Löschen eines Brandes möglich.

Um auf einfache Weise Kältemittel aus der Klimaanlage in den geschützten Tank zu transportieren, herrscht in dem Tank zum Evakuieren des Kältemittels ein Unterdruck. Der Tank ist quasi selbstansaugend und es werden nicht zwingend Fördereinrichtungen zum Transport des Kältemittels aus der Klimaanlage in den Tank benötigt.

Bevorzugt nimmt der Tank mittels des Vakuums das Kältemittel auf und ist mit dem Steuergerät für einen Airbag verbunden. Das Kältemittel wird demnach aus der Klimaanlage herausbefördert, wenn der Airbag ausgelöst wird und/oder die Sensoren Werte feststellen, die auf einen Brand des Kraftfahrzeuges schließen lassen.

Damit der Brand signalisiert werden kann, steht eine optische und/oder akustische Alarmeinrichtung und/oder eine Meldeeinrichtung mit dem Sensor in Verbindung. Der Alarmeinrichtung oder der Meldeeinrichtung ist ein Datenverarbeitungsgerät zugeordnet, bei dem es sich um das kraftfahrzeugseitige Steuergerät handeln kann. Während die Alarmeinrichtung ein in der Umgebung des Kraftfahrzeuges wahrnehmbares Signal erzeugt, setzt die Meldeeinrichtung beispielsweise mittels eines GSM- oder Funk-Moduls eine Nachricht an eine vorgegebene Stelle ab. Es ist möglich, eine vordefinierte Nachricht an den Besitzer des Kraftfahrzeuges oder eine Servicestelle des Herstellers zu senden, die neben der Information, dass es sich um einen Brand handelt, auch Positionsdaten des Kraftfahrzeugs enthalten kann.

Beispielsweise kann auch im Fall einer Beschädigung des Kompressors bzw. des mit dem Kompressor verbundenen Kältemittelkreislaufs das zweite Ventil selbsttätig öffnen oder geöffnet werden und das Kältemittel wird in dem ein Bindemittel und/oder Neutralisationsmittel für das Kältemittel aufweisenden Tank aufgefangen und für die Umwelt unschädlich gelagert.

Es ist für de Fachmann erkennbar, dass die Schutzeinrichtung und insbesondere der Tank im Zusammenhang mit unterschiedlichen Klimaanlagen einsetzbar ist und auch keiner Beschränkung bezüglich des Einsatzortes unterliegt. Es kann sich selbstverständlich um eine stationäre Klimaanlage oder eine auf einem Wasserfahrzeug, also einem Boot oder Schiff, einem Flugzeug oder einem beliebigen anderen Fahrzeug installierte Klimaanlage handeln.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand von Ausführungsbeispielen unter Bezugnahme auf die zugehörige Zeichnung näher erläutert. Es zeigt:

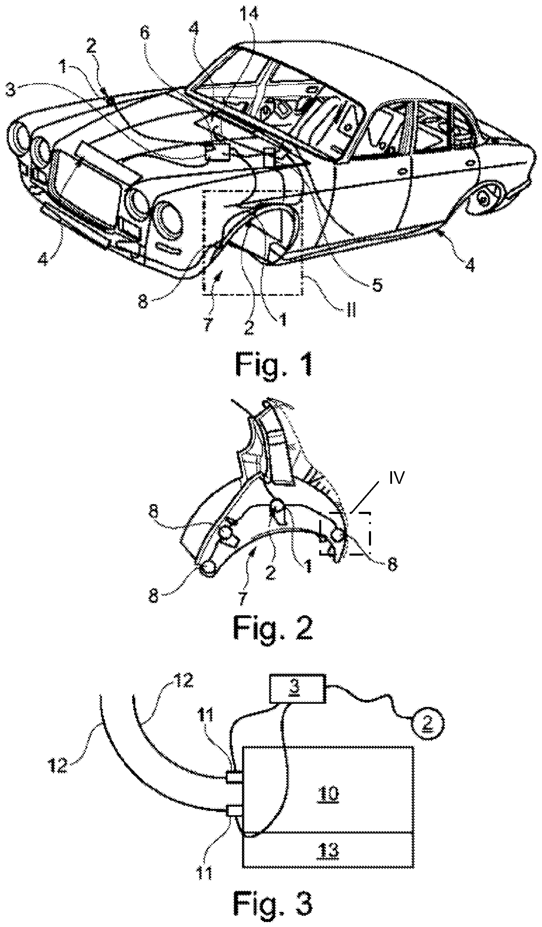

- Fig. 1: eine schematische Teildarstellung eines Kraftfahrzeuges mit einer Schutzeinrichtung,
- Fig. 2: eine schematische Darstellung einer Einzelheit II gemäß Fig. 1 und
- Fig. 3: eine schematische Teildarstellung der Schutzeinrichtung nach Fig. 1,

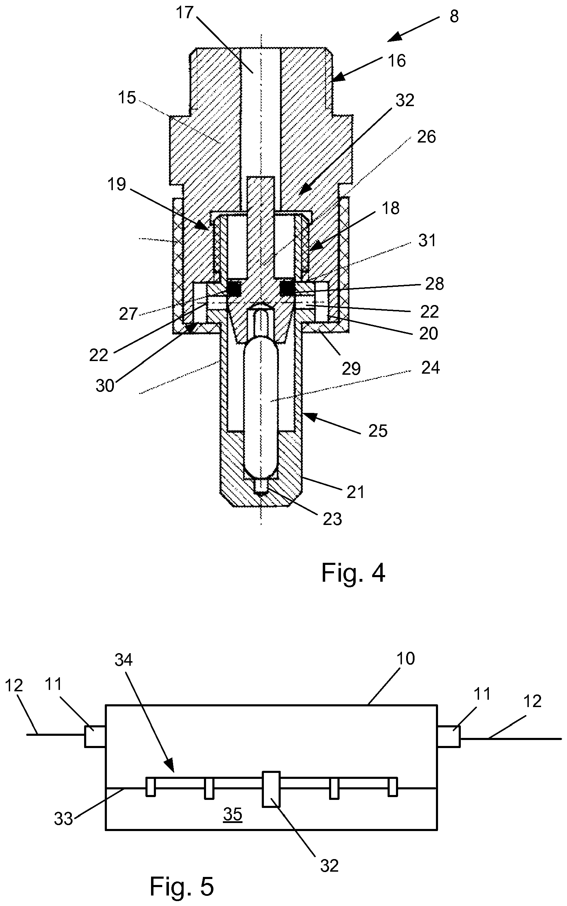

- Fig. 4: eine Schnittdarstellung einer Austrittsvorrichtung der Schutzeinrichtung nach Fig. 1,
- Fig. 5: eine schematische Teildarstellung eines Tanks der Schutzeinrichtung nach Fig. 1,

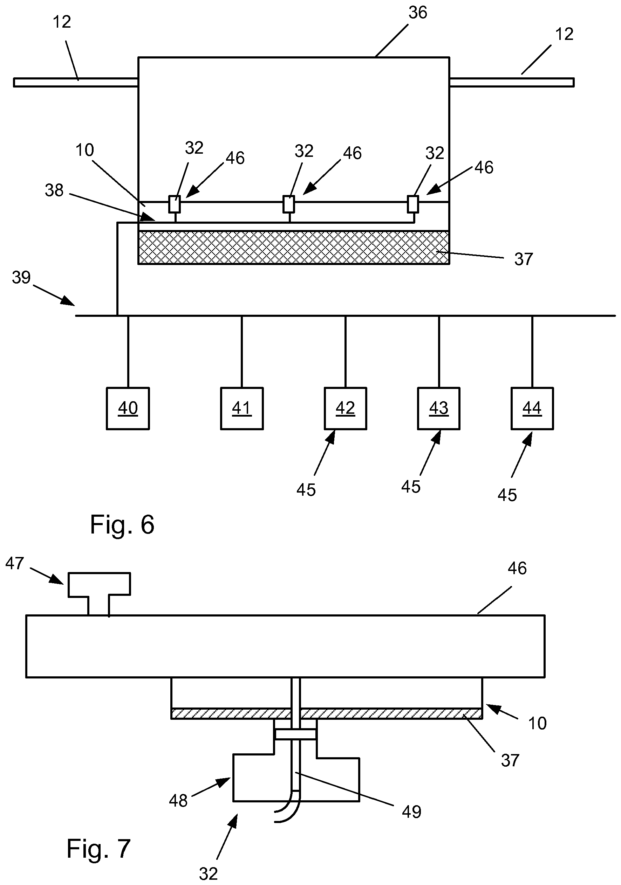

- Fig. 6: schematische Teildarstellung eines in einem Kraftfahrzeug installierten Kompressors für eine Klimaanlage mit einer Schutzeinrichtung und
- Fig. 7: eine schematische Teildarstellung eines Tanks der Schutzeinrichtung nach Fig. 1 in alternativer Ausgestaltung.

Die in dem Kraftfahrzeug installierte Schutzeinrichtung umfasst mehrere als Temperatursensoren 1 ausgebildete Sensoren 2, die mit einem Steuergerät 3 gekoppelt sind, das wiederum mit an Behältern 4 angebrachten ersten Ventilen 5 verbunden ist, wobei die karosserieseitig befestigten Behälter 4 einer Feuerbekämpfungsvorrichtung zugeordnet sind und Löschmittel aufnehmen. Das die Signale der Sensoren 2 auswertende Steuergerät 3 ist Bestandteil eines Fahrzeug-Bus-Systems und mit einer Alarm- und Meldeeinrichtung 6 verbunden. Vorliegend sind die Sensoren in Radkästen 7 angeordnet, in denen sich auch Austrittsvorrichtungen 8 für das Löschmittel befinden, das aufgrund eines in dem Behälter 4 herrschenden Überdruckes ins Freie gelangt. Die Austrittsvorrichtungen 8 sind über erste Ventile 5 an den Behälter 4 angeschlossen.

In Ausgestaltung ist die das temperaturgesteuerte erste Ventil 5 umfassende der Austrittsvorrichtung 8 in wesentlichen zweiteilig ausgebildet und umfasst einen Grundkörper 15, der entweder unmittelbar oder über eine Leitung mit dem mit Löschmittel gefüllten Behälter 4 in Verbindung steht und hierzu beispielsweise mit einem Außengewinde 16 versehen ist. Der Grundkörper 15 weist eine konzentrische Durchgangsbohrung 17 auf, die in eine Stufenbohrung 18 mit einem Innengewinde 19 und einem demgegenüber vergrößerten zylindrischen Absatz 20 mündet. In das Innengewinde 19 ist ein im Wesentlichen ein Metallrohr 25 umfassender Düsenkopf 21 mit umfangsseitigen Austrittsbohrungen 22 eingeschraubt, die im Bereich des Absatzes 20 radial nach außen weisend ausgerichtet sind. Der Düsenkopf 21 ist an seinem dem Grundkörper 15 gegenüberliegenden Ende verschlossen und in seinem Inneren mit einer Zentrierbohrung 23 für ein geschlossenes Glasröhrchen 24 versehen, das an seinem gegenüberliegenden Ende einen Ventilstößel 26 in einer derartigen Lage hält, dass Löschmittel nicht zu den Austrittsbohrungen 22 gelangt. Der Ventilstößel 26 weist zur Abdichtung gegenüber dem Inneren des Düsenkopfes 21 einen Gummidichtring 27 auf, der zum einen in einer Nut 28 des Ventilstößels 26 einliegt und zum anderen gegen eine Innenwandung des Metallrohrs 25 abdichtet. Das Glasröhrchen 24 hat eine Bruchtemperatur von etwa 93°C und ist mit einer Flüssigkeit und/oder Luft gefüllt. Nach einem Versagen des Glasröhrchens 24 wird der Ventilstößel 26 in Richtung des verschlossenen Endes des Düsenkopfes 21 verlagert und gibt die Austrittsbohrungen 22 frei.

Um ein Verschmutzen der Austrittsbohrungen 22 zu vermeiden, ist eine Schutzkappe 29 vorgesehen, die auf einem Außendurchmesser des Grundkörpers 15 lösbar gehalten ist und stirnseitig einen ringförmigen Auslass 30 überdeckt, der zwischen dem zylindrischen Absatz 20 und einem die Austrittsbohrungen 22 aufweisenden ringförmigen Ansatz 31 des Düsenkopfes 21 gebildet ist. Die Schutzkappe 29 wird beim Austritt des Löschmittels durch dessen Druck entfernt und gibt den Auslass 30 frei.

Um im Schadensfall, beispielsweise bei einem Brand oder Unfall oder dergleichen, Kältemittel einer Klimaanlage aufzunehmen, ist erfindungsmäßig ein temperaturbeständiger Tank 10 vorgesehen, der über Kopplungseinrichtungen 11 mit Schlauchleitungen 12 der Klimaanlage verbunden ist. In dem Tank 10, in dem ein Unterdruck herrscht, befindet sich ein Medium 13 zur Aufnahme bzw. zum Binden des Kältemittels. Strömungskanäle für das Kältemittel können durch ein zweites temperaturgesteuertes Ventil 32, das im Aufbau dem zuvor erläuterten ersten temperaturgesteuerten Ventil 5 entspricht freigegeben werden. In alternativer Ausgestaltung wird das zweite Ventil 32 mittels eines durch einen Sensor 2 verursachten Signals geöffnet.

In weiterer alternativer Ausgestaltung weist der Tank 10 einen Zwischenboden 33 auf, in dem mittels einer Ventileinrichtung 34, die das zweite Ventil 32 umfasst, Strömungskanäle freigegeben werden. Ist die Klimaanlage nicht in Betrieb, kann der Tank 10 als Vorratsbehälter für das Kältemittel dienen. Im Schadensfall wird die Ventileinrichtung 34 durch das zweite Ventil 32 geöffnet und die Strömungskanäle in dem Zwischenboden 33 freigegeben. Hierbei wird aufgrund des Unterdruckes in dem Bereich 35 des Tanks 10, der durch den Zwischenboden 33 von der Umgebung abgegrenzt ist, das Kältemittel evakuiert und durch das in diesem Bereich 35 vorhandene Medium gebunden, sodass es fachgerecht entsorgt werden kann und die Umwelt nicht belastet.

In Weiterer alternativer Ausgestaltung ist ein Kompressor 36 für die Klimaanlage des Kraftfahrzeugs, die beispielsweise mit 2,3,3,3-Tetrafluorpropen als Kältemittel betrieben wird, an den Kältemittelkreislauf angeschlossen, wie durch die beiden Schlauchleitungen 12 angedeutet ist. Der Kompressor 36 ist mit dem Tank 10, über mehrere zweite Ventile 32 aufweisende Strömungskanäle 46 verbunden. In dem Tank 10 befindet sich das Medium zum Binden und/oder Neutralisieren des Kältemittels, das vorliegend als eine saugfähige Matte 37 ausgebildet ist, die bestimmte mechanische und chemisehe Eigenschaften aufweist, die der Fachmann insbesondere in Abhängigkeit von dem verwendeten Kältemittel bestimmt.

Die zweiten Ventile 32 stehen über Leitungen 38 mit einem Bordnetz 39 des Kraftfahrzeuges in Verbindung, an das eine Batterie 40, ein Steuergerät 41 sowie verschiedene Sensoren 45 angeschlossen sind, die beispielsweise als ein Temperatursensor 42 und/oder Rauchsensor 43 und/oder Airbagsensor 44 ausgebildet sind. Wird durch die Sensoren 45 ein Unfall, insbesondere im Zusammenhang mit einem Brand, festgestellt, erfolgt eine Ansteuerung der Ventile 32 zum Öffnen der Strömungskanäle 46, damit das Kältemittel in den Tank 10 gelangt und von der Matte 37 gebunden wird, damit es keinen weiteren Schaden verursacht. Zur Unterstützung der Evakuation des Kältemittels kann beispielsweise eine Pumpe vorgesehen sein oder in dem Tank 10 herrscht ein Unterdruck.

Bei einer alternativen Ausgestaltung des ersten Ventils, 5, von dem selbstverständlich eine Vielzahl verbaut sein können, erfolgt eine Freigabe des Löschmittels aus dem mindestens einen Behälter 4, falls die die Sensoren 2 eine Temperatur messen, die auf einen Brand schließen lässt oder eine entsprechende Rauchentwicklung feststellen. An dem den Sensoren 2 zugeordneten Steuergerät 3 liegt ein entsprechendes Signal an. Das Steuergerät 3 bewirkt nach einer Signalverarbeitung eine Öffnung des dem Behälter 4 zugeordneten Ventils 5, worauf aus den Austrittsvorrichtungen 8 das Löschmittel austritt, um den Brand zu löschen, insbesondere an der Stelle nahe des meldenden Sensors 2. Gleichzeitig geht ein entsprechendes Signal an die Kopplungseinrichtungen 11 bzw. die zweiten Ventile 32 des Tanks 10, die die zugeordneten Schlauchleitungen 12 der Klimaanlage penetrieren oder entsprechende Strömungskanäle im Inneren des Tanks 10 öffnen. Durch den im Tank 10 herrschenden Unterdruck wird das Kältemittel aus der Klimaanlage evakuiert und sicher in dem Tank 10, der durch die Kopplungseinrichtungen 11 beispielsweise nach einer vorgegebenen Zeit verschließbar ist, gelagert. Darüber hinaus wird mittels einer eventuell vorgesehenen Alarm- und Meldeeinrichtung 6 ein Signal bezüglich des Brandes des Kraftfahrzeuges abgesetzt.

In Weiterer alternativer Ausgestaltung ist der Tank 10 abschnittsweise mit einer Leitung 46, entweder einer Rohr- oder einer Schlauchleitung, verbunden oder integraler Bestandteil der Leitung 46 ist, die ein Belüftungsventil 47 aufweist, das bei einem Unterdruck in der Leitung 46 diese belüftet. Dem Tank 10 ist ein Berstventil 48 zugeordnet, das einen verschiebbar gelagerten Ventilstößel 49 zum Öffnen bzw. Schließen einer Öffnung in der Leitung 46 im Bereich des einen Unterdruck und die Matte 37 aufweisenden Tanks 10 umfasst. Durch das Öffnen des Berstventils 48 entsteht durch die Verlagerung des Ventilstößels 49 eine Sogwirkung, die eine Beförderung des Kältemittels aus der Leitung 46 in den Tank 10 begünstigt, wobei gleichzeitig das Belüftungsventil 47 öffnet. Selbstverständlich können mehrere mit Tanks 10 bestückte Leitungsabschnitte in einem Kältemittelkreislauf vorgesehen sein.

Um die zuvor beschriebenen Vorgänge auch durch einen Insassen des Kraftfahrzeuges auszuführen, ist im Inneren des Kraftfahrzeuges ein mit dem Steuergerät 3 und damit mit allen wesentlichen Komponenten verbundener Auslöseschalter 14 vorgesehen.

Selbstverständlich kann die Schutzeinrichtung nicht nur in einem Kraftfahrzeug, sondern auch an Wasserfahrzeugen, Flugzeugen, mobilen und/oder stationären Klimaanlagen verwendet werden, ohne den Rahmen der Erfindung zu verlassen. Durch die Schutzeinrichtung kann ein Brand bekämpft und/oder ein Kältemittel einer Klimaanlage gebunden werden.

**Bezugszeichenliste**

| | | | |
|---|---|---|---|
| 1. | Temperatursensor | 28. | Nut |
| 2. | Sensor | 29. | Schutzkappe |
| 3. | Steuergerät | 30. | Auslass |
| 4. | Behälter | 31. | Ansatz |
| 5. | erstes Ventil | 32. | zweites Ventil |
| 6. | Alarm- und Meldeeinrichtung | 33. | Zwischenboden |
| | | 34. | Ventileinrichtung |
| 7. | Radkasten | 35. | Bereich |
| 8. | Austrittsvorrichtung | 36. | Kompressor |
| | | 37. | Matte |
| 10. | Tank | 38. | Leitung |
| 11. | Kopplungseinrichtung | 39. | Bordnetz |
| 12. | Schlauchleitung | 40. | Batterie |
| 13. | Medium | 41. | Steuergerät |
| 14. | Auslöseschalter | 42. | Temperatursensor |
| 15. | Grundkörper | 43. | Rauchsensor |
| 16. | Außengewinde | 44. | Airbagsensor |
| 17. | Durchgangsbohrung | 45. | Sensor |
| 18. | Stufenbohrung | 46. | Strömungskanal |
| 19. | Innengewinde | 47. | Belüftungsventil |
| 20. | Absatz | 48. | Berstventil |
| 21. | Düsenkopf | 49. | Ventilstößel |
| 22. | Austrittsbohrungen | | |
| 23. | Zentrierbohrung | | |
| 24. | Glasröhrchen | | |
| 25. | Metallrohr | | |
| 26. | Ventilstößel | | |
| 27. | Gummidichtring | | |

## Patentansprüche

1. Brandschutzeinrichtung für ein Kraftfahrzeug, mit wenigstens einem an eine Klimaanlage strömungstechnisch anschließbaren, temperaturbeständigen Tank (10), in welchem zur Aufnahme eines Kältemittels der Klimaanlage ein Unterdruck herrscht, und
wenigstens einem temperatur- oder signalgesteuerten zweiten Ventil (32) zum Öffnen wenigstens eines Strömungskanals (46), um im Falle eines Feuers Kältemittel von der Klimaanlage in den wenigstens einen temperaturbeständigen Tank (10) zu überführen, damit ein Entweichen von Kältemittel in das Feuer verhindert wird,
**dadurch gekennzeichnet,**
**dass** in dem Tank (10) ein Medium zum Binden und/oder Neutralisieren des Kältemittels vorhanden ist.

2. Brandschutzeinrichtung nach Anspruch 1,
**dadurch gekennzeichnet,**
**dass** dem Tank (10) eine Kopplungseinrichtung (11) mit einer Penetrationseinrichtung für eine Schlauchleitung (12) der Klimaanlage zugeordnet ist.

3. Brandschutzeinrichtung nach Anspruch 1,
**gekennzeichnet durch**,
zusätzlich eine Feuerbekämpfungseinrichtung, die einen mit Löschmittel gefüllten Behälter (4) aufweist und eine mit einem temperaturgesteuerten ersten Ventil (5) verschließbare Austrittsöffnung (8) umfasst.

4. Brandschutzeinrichtung nach Anspruch 1 oder 2,
**dadurch gekennzeichnet,**
**dass** das zweite Ventil (32) ein mit Flüssigkeit und/oder Luft gefülltes Glasröhrchen (24) umfasst, welches bei einer vorbestimmten Temperatur zerbricht und einen Durchlass für ein Kältemittel freigibt.

5. Brandschutzeinrichtung nach Anspruch 3 oder 4,
**dadurch gekennzeichnet,**
**dass** das erste Ventil (5) ein mit Flüssigkeit und/oder Luft gefülltes Glasröhrchen (24) umfasst, welches bei einer vorbestimmten Temperatur zerbricht und einen Durchlass für ein Löschmittel freigibt.

6. Brandschutzeinrichtung nach Anspruch 4 oder 5,
**dadurch gekennzeichnet,**
**dass** das Glasröhrchen (24) in ein Metallrohr eingesetzt ist.

7. Brandschutzeinrichtung nach Anspruch 3,
**dadurch gekennzeichnet,**
**dass** das erste und zweite Ventil (5; 32) einen Ventilstößel aus einem Memory-Metall umfasst, der bei einer vorgegebenen Temperatur mindestens einen Durchlass für das Kältemittel freigibt.

8. Brandschutzeinrichtung nach Anspruch 6,
**dadurch gekennzeichnet,**
**dass** das erste und zweite Ventil (5; 32) als ein pyrotechnisches Berstventil (48) ausgebildet ist.

9. Brandschutzeinrichtung nach einem der Ansprüche 1 bis 3,
**dadurch gekennzeichnet,**
**dass** der Tank (10) mit einem Kompressor (36) oder einer Schlauchleitung (12) der Klimaanlage derart verbunden ist, dass bei einem Öffnen des zweiten Ventils (32) das Kältemittel in den Tank (10) evakuiert wird.

10. Brandschutzeinrichtung nach einem der Ansprüche 1 bis 9,
**dadurch gekennzeichnet,**
**dass** der Tank (10) einen Zwischenboden (33) aufweist, der einen Unterdruckbereich (35) von einem Vorratsbereich trennt und in dem durch das zweite Ventil (32) zu öffnende Durchlässe vorhanden sind.

11. Brandschutzeinrichtung nach Anspruch 10,
**dadurch gekennzeichnet,**
**dass** das Medium zum Binden und/oder Neutralisieren des Kältemittels im Unterdruckbereich (35) vorhanden ist.

12. Brandschutzeinrichtung nach Anspruch 10 oder 11,
**dadurch gekennzeichnet,**
**dass** die das Medium zum Binden und/oder Neutralisieren des Kältemittels ein Zwei-Komponenten-Bindemittel oder eine saugfähige Matte (37) ist.

13. Brandschutzeinrichtung nach einem der vorstehenden Ansprüche,
**dadurch gekennzeichnet,**
**dass** das zweite Ventil (32) aufgrund eines definierten Sensorsignals die Strömungsverbindung mit einem Kältemittelkreislauf der Klimaanlage öffnet und/oder schließt.

14. Brandschutzeinrichtung nach einem der vorstehenden Ansprüche,
**dadurch gekennzeichnet,**
**dass** der Tank (10) integraler Bestandteil eines Gehäuses des Kompressors (36) der Klimaanlage ist.

15. Brandschutzeinrichtung nach einem der vorstehenden Ansprüche,
**dadurch gekennzeichnet,**
**dass** ein als Temperatursensor (1) oder Rauchsensor ausgebildeter Sensor (2) mit dem ersten und zweiten Ventil (32) verbunden ist.

16. Brandschutzeinrichtung nach Anspruch 12,
**dadurch gekennzeichnet,**
**dass** ein Steuergerät (3) mit dem Sensor (2) gekoppelt ist, das mit einem Airbagsensor (44) in Verbindung steht.

17. Fahr- oder Flugzeug mit einer Brandschutzeinrichtung nach einem der Ansprüche 1 bis 13.

## Claims

1. A fire protection device for a vehicle, having
at least one temperature-resistant tank (10) capable of being connected to an air-conditioning system, in which tank a negative pressure prevails for holding a refrigerant of the air-conditioning system, and
at least one temperature- or signal-controlled second valve (32) for opening at least one flow channel (46) in order to transfer refrigerant from the air-conditioning system into the at least one temperature-resistant tank (10) in the event of a fire in order to prevent an escape of refrigerant into the fire,
**characterized in**
**that** the a medium to bind and/or neutralize the refrigerant is available in the tank (10).

2. The fire protection device according to claim 1,
**characterized in**
**that** a coupling device (11) with a penetration device for a hose line (12) of the air-conditioning system is associated with the tank (10).

3. The fire protection device according to claim 1,
**characterized by**,
an additional fire-fighting device, which comprises a container (4) filled with an extinguishing agent and a sealable exit opening (8) with a temperature-controlled first valve (5).

4. The fire protection device according to claim 1 or 2,
**characterized in**
**that** the second valve (32) comprises a glass tube (24) filled with liquid and/or air, which breaks at a predetermined temperature and releases a passage for a refrigerant.

5. The fire protection device according to claim 3 or 4,
**characterized in**
**that** the first valve (5) comprises glass tube (24) with liquid and/or air, which breaks at a predetermined temperature and releases a passage for a refrigerant.

6. The fire protection device according to claim 4 or 5,
**characterized in**
**that** the glass tube (24) is inserted into a metal pipe.

7. The fire protection device according to claim 3,
**characterized in**
**that** the first and second valve (5; 32) comprise a valve tappet made of a memory metal, which releases at least one passage for the refrigerant at a predetermined temperature.

8. The fire protection device according to claim 6,
**characterized in**
**that** the first and second valve (5; 32) are designed as a pyrotechnic burst valve (48).

9. The fire protection device according to one of the claims 1 to 3,
**characterized in**
**that** the tank (10) is connected to a compressor (36) or a hose line (12) of the air-conditioning system in such a way that the refrigerant is evacuated into the tank (10) when the second valve (32) is opened.

10. The fire protection device according to one of the claims 1 to 9,
**characterized in**
**that** the tank (10) comprises an intermediate floor (33), which separates a negative-pressure area (35) from a supply area and in which passages to be opened by the second valve (32) are present.

11. The fire protection device according to claim 10,
**characterized in**
**that** the medium for binding and/or neutralizing the refrigerant is present in the negative-pressure area (35) .

12. The fire protection device according to claim 10 or 11,
**characterized in**
**that** the medium for binding and/or neutralizing the refrigerant is a two-component binder or an absorbent mat (37).

13. The fire protection device according to any of the preceding claims,
**characterized in**
**that** the second valve (32) opens and/or closes the flow connection to a refrigerant circuit of the air-conditioning system.

14. The fire protection device according to any of the preceding claims,
**characterized in**
**that** the tank (10) is an integral component of a housing of the compressor (36) of the air-conditioning system.

15. The fire protection device according to any of the preceding claims,
**characterized in**
**that** a sensor (2) designed as a temperature sensor (1) or a smoke sensor is connected to the first and second valve (32).

16. The fire protection device according to claim 12,
**characterized in**
**that** a control unit (3) is coupled to the sensor (2), which is connected to an air-bag sensor (44).

17. A vehicle or aircraft with a fire protection device according to any one of the claims 1 to 13.

## Revendications

1. Dispositif de protection incendie destiné à un véhicule automobile, pourvu d'au moins un réservoir (10) résistant aux températures, susceptible d'être raccordé fluidiquement sur un système de climatisation, dans lequel règne une dépression pour la réception d'un fluide réfrigérant du système de climatisation et
pourvu d'au moins une deuxième soupape (32) à déclenchement thermique ou par signal, pour l'ouverture d'au moins un canal d'écoulement (46), pour transférer en cas d'incendie du fluide réfrigérant du système de climatisation dans l'au moins un réservoir (10) résistant aux températures, pour qu'il soit empêché que du fluide réfrigérant ne s'échappent dans le feu,
**caractérisé en ce**
**que** dans le réservoir (10) est présent un agent destiné à lier et/ou à neutraliser le fluide réfrigérant.

2. Dispositif de protection incendie selon la revendication 1,
**caractérisé en ce**
**qu'**au réservoir (10) est associé un système de couplage (11) doté d'un système de pénétration pour un conduit flexible (12) du système de climatisation.

3. Dispositif de protection incendie selon la revendication 1,
**caractérisé par**
en supplément un système de lutte contre l'incendie, qui comporte un récipient (4) et qui comprend un orifice de sortie (8) susceptible d'être fermé par une première soupape (5) à déclenchement thermique.

4. Dispositif de protection incendie selon la revendication 1 ou 2,
**caractérisé en ce**
**que** la deuxième soupape (32) comporte un tube en verre (24) rempli de liquide et/ou d'air qui se brise à une température prédéfinie et qui libère un passage pour un fluide réfrigérant.

5. Dispositif de protection incendie selon la revendication 3 ou 4,
**caractérisé en ce**
**que** la première soupape (5) comprend un tube en verre (24) rempli de liquide et/ou d'air, qui se brise à une température prédéfinie et qui libère un passage pour un agent extincteur.

6. Dispositif de protection incendie selon la revendication 4 ou 5,
**caractérisé en ce**
**que** le tube en verre (24) est inséré dans un tube métallique.

7. Dispositif de protection incendie selon la revendication 3,
**caractérisé en ce**
**que** la première et deuxième soupapes (5 ; 32) comprennent un poussoir de soupape en un métal à mémoire de forme, qui à une température prédéfinie libère au moins un passage pour le fluide réfrigérant.

8. Dispositif de protection incendie selon la revendication 6,
**caractérisé en ce**
**que** les première et deuxième soupapes (5 ; 32) sont conçues sous la forme d'une soupape d'éclatement (48) pyrotechnique.

9. Dispositif de protection incendie selon l'une quelconque des revendications 1 à 3,
**caractérisé en ce**
**que** le réservoir (10) est relié avec un compresseur (36) ou un conduit flexible (12) du système de climatisation, de telle sorte que lors d'une ouverture de la deuxième soupape (32), le fluide réfrigérant soit évacué dans le réservoir (10).

10. Dispositif de protection incendie selon l'une quelconque des revendications 1 à 9,
**caractérisé en ce**
**que** le réservoir (10) comporte un fond intermédiaire (33) qui sépare une zone de dépression (35) d'une zone de réserve et dans laquelle sont présents des passages qui doivent être ouverts par la deuxième soupape (32).

11. Dispositif de protection incendie selon la revendication 10,
**caractérisé en ce**
**que** l'agent destiné à lier et/ou à neutraliser le fluide réfrigérant est présent dans la zone de dépression (35).

12. Dispositif de protection incendie selon la revendication 10 ou 11,
**caractérisé en ce**
**que** l'agent destiné à lier et/ou à neutraliser le fluide réfrigérant est un agent liant bicomposants ou une natte absorbante (37).

13. Dispositif de protection incendie selon l'une quelconque des revendications précédentes,
**caractérisé en ce**
**que** sur la base d'un signal de capteur défini, la deuxième soupape (32) ouvre et/ou ferme la liaison fluidique avec un circuit de fluide réfrigérant du système de climatisation.

14. Dispositif de protection incendie selon l'une quelconque des revendications précédentes,
**caractérisé en ce**
**que** le réservoir (10) est une partie intégrante d'un carter du compresseur (36) du système de climatisation.

15. Dispositif de protection incendie selon l'une quelconque des revendications précédentes,
**caractérisé en ce**
**qu'**un capteur (2) conçu sous la forme d'un capteur de température (1) ou d'un détecteur de fumée est relié avec la première et deuxième soupapes (32).

16. Dispositif de protection incendie selon la revendication 12,
**caractérisé en ce**
**qu'**un instrument de commande (3) qui est en liaison avec un capteur d'airbag (44) est accouplé avec le capteur (2).

17. Véhicule ou avion, pourvu d'un dispositif de protection incendie selon l'une quelconque des revendications 1 à 13.
